(19) Europäisches Patentamt
European Patent Office
Office européen des brevets

(11) **EP 2 294 328 B1**

(12) **FASCICULE DE BREVET EUROPEEN**

(45) Date de publication et mention de la délivrance du brevet:
**03.10.2012 Bulletin 2012/40**

(51) Int Cl.:
***F16D 13/75*** *(2006.01)*   ***F16D 23/12*** *(2006.01)*
***F16D 27/00*** *(2006.01)*

(21) Numéro de dépôt: **09772741.6**

(86) Numéro de dépôt international:
**PCT/FR2009/051288**

(22) Date de dépôt: **02.07.2009**

(87) Numéro de publication internationale:
**WO 2010/001059 (07.01.2010 Gazette 2010/01)**

(54) **DISPOSITIF D'EMBRAYAGE, NOTAMMENT POUR VEHICULE AUTOMOBILE, DU TYPE COMPORTANT UN DISPOSITIF DE COMMANDE A MOYENS D'ASSISTANCE**

KUPPLUNGSVORRICHTUNG, INSBESONDERE FÜR EIN KRAFTFAHRZEUG MIT STROMGESTÜTZTER ANTRIEBSVORRICHTUNG

CLUTCH DEVICE, PARTICULARLY FOR A MOTOR VEHICLE, OF THE TYPE COMPRISING A POWER-ASSISTED OPERATING DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **04.07.2008 FR 0854559**

(43) Date de publication de la demande:
**16.03.2011 Bulletin 2011/11**

(73) Titulaire: **Valeo Embrayages
80009 Amiens Cedex 2 (FR)**

(72) Inventeurs:
• **MAUREL, Hervé
F-80000 Amiens (FR)**
• **DELEVALLEE, Jean-Louis
F-80090 Amiens (FR)**

(56) Documents cités:
**EP-A- 1 722 119    FR-A- 2 896 288
GB-A- 2 351 129**

**Description**

La présente invention concerne un dispositif d'embrayage, notamment pour véhicule automobile, du type comportant un dispositif de commande à moyens d'assistance.

On connaît déjà dans l'état de la technique, notamment d'après FR-A-2 896 288, un dispositif de commande destiné à être relié à un embrayage de véhicule automobile, l'embrayage étant susceptible de basculer entre une position de repos, dans laquelle l'embrayage est embrayé, et une position active, dans laquelle l'embrayage est débrayé. Il est rappelé élastiquement vers sa position de repos.

Le dispositif de commande comporte un organe d'actionnement de l'embrayage, relié directement ou indirectement à ce dernier (par exemple à l'aide d'un circuit hydraulique). Cet organe d'actionnement est susceptible de se déplacer entre une position, dans laquelle l'embrayage est dans sa position de repos, et une autre position, dans laquelle l'organe d'actionnement coopère avec l'embrayage pour le maintenir en position active.

Le dispositif de commande comporte également des moyens d'entraînement de l'organe d'actionnement, comprenant généralement un moteur électrique relié cinématiquement à l'organe d'actionnement.

En outre, afin d'assister le moteur électrique pour entraîner l'organe d'actionnement, le dispositif de commande comporte habituellement des moyens d'assistance au déplacement de l'organe d'actionnement, destinés à fournir à l'organe d'actionnement un effort d'assistance opposé à un effort de rappel élastique de l'embrayage vers sa position de repos.

Dans certains cas, notamment dans le cas d'un véhicule comportant un dispositif à double embrayage, il est nécessaire qu'au moins un des deux embrayages puisse s'ouvrir par défaut en cas de problème, par exemple en cas de défaillance électrique interrompant le moteur électrique des moyens d'entraînement du dispositif de commande. En effet, dans le cas d'un dispositif à double embrayage, des fermetures simultanées des deux embrayages seraient incompatibles mécaniquement, puisqu'un double embrayage permet de coupler alternativement l'arbre d'un moteur du véhicule avec deux arbres coaxiaux d'entrée d'une boîte de vitesses, dont les rapports de transmission sont différents.

Ainsi, on prévoit généralement qu'en cas de défaillance du moteur électrique des moyens d'entraînement, le dispositif d'actionnement ne soit plus commandé en position ni en vitesse par ces moyens d'entraînement. L'embrayage est alors automatiquement débrayé, en étant rappelé élastiquement vers sa position de repos.

Dans ce cas, l'organe d'actionnement, relié à l'embrayage, est entraîné par l'effort de rappel de l'embrayage. Un tel déplacement est limité par une butée de fin de course. L'effort de rappel de l'embrayage provoque un choc de l'organe d'actionnement contre la butée. Ce choc a pour effet que tous les éléments coopérant avec cet organe d'actionnement sont soumis à des contraintes inhabituelles, qui peuvent entraîner une usure prématurée de ces éléments.

L'invention a notamment pour but de remédier à cet inconvénient en fournissant un dispositif d'embrayage capable de limiter l'usure des éléments constituant le dispositif de commande en cas de rappel brusque de l'organe d'actionnement à la suite d'une défaillance du moteur électrique des moyens d'entraînement, cela sans sur-dimensionner ces éléments et sans introduire d'élément supplémentaire.

Le document GB-2 351 129 divulgue aussi un dispositif d'embrayage muni d'un organe d'actionnement et de moyens d'assistance.

A cet effet, l'invention a pour objet un dispositif d'embrayage, notamment pour véhicule automobile, du type comportant :

- un embrayage comprenant un diaphragme susceptible de basculer entre une position de repos dans laquelle l'embrayage est débrayé, et une position active dans laquelle l'embrayage est embrayé, ce diaphragme étant rappelé élastiquement vers sa position de repos et étant tel qu'on exerce un effort tel qu'une poussée ou un tirage pour le mettre en position active ; et

- un dispositif de commande du diaphragme, comprenant :

  - un organe d'actionnement du diaphragme, déplaçable suivant une course totale théorique définie entre une première position correspondant à une butée de fin de course et une seconde position dans laquelle l'organe d'actionnement coopère avec le diaphragme pour le maintenir en position active, le dispositif de commande étant agencé de sorte que le diaphragme, après avoir quitté sa position active, atteint sa position de repos lorsque l'organe d'actionnement est à distance de la première position ; et

  - des moyens d'assistance au déplacement de l'organe d'actionnement, destinés à appliquer à l'organe d'actionnement un effort d'assistance opposé à un effort de rappel élastique du diaphragme vers sa position de repos,

les efforts d'assistance et de rappel générant respectivement des énergies dites d'assistance et de rappel, le dispositif d'embrayage étant agencé de sorte que, sur la course totale théorique vers la première position, l'énergie d'assistance est supérieure ou égale à l'énergie de rappel, si bien que, en fonctionnement, l'organe d'actionnement demeure à distance de la première position.

On rappelle que l'énergie E générée par un effort F appliqué le long d'une course C est définie de la manière suivante :

$$E = \int_C F(x)\,dx$$

où x est une coordonnée sur la course C, et où F(x) est l'effort appliqué pour une coordonnée x donnée.

L'invention prévoit de choisir des moyens d'assistance tels que, le long de la course totale théorique de l'organe d'actionnement, l'effort d'assistance génère une énergie d'assistance supérieure ou égale à l'énergie de rappel due à l'effort de rappel.

Ainsi, dans le cas où l'organe d'actionnement est rappelé vers sa première position par l'effort de rappel du diaphragme, les moyens d'assistance de l'invention permettent un amortissement du mouvement de l'organe d'actionnement vers sa première position. Ils limitent donc les contraintes auxquelles les éléments du dispositif de commande sont soumis.

De manière optionnelle, dans un dispositif d'embrayage selon l'invention, les moyens d'assistance comportent un organe d'assistance sollicité élastiquement contre une came reliée cinématiquement à l'organe d'actionnement de façon à fournir l'effort d'assistance, et dans lequel la came comporte :

- une partie d'assistance, telle que, lorsque l'organe d'assistance est sollicité contre cette partie d'assistance; l'effort d'assistance est inférieur à l'effort de rappel élastique du diaphragme,
- une partie d'amortissement, telle que, lorsque l'organe d'assistance est sollicité contre cette partie d'amortissement, l'effort d'assistance est suffisant pour que, le long de la course totale théorique, l'énergie d'assistance soit supérieure ou égale à l'énergie de rappel,

l'organe d'assistance étant sollicité contre la partie d'assistance lorsque l'embrayage est embrayé, et l'embrayage étant débrayé lorsque l'organe d'assistance est sollicité contre la partie d'amortissement.

Dans la partie d'assistance, l'effort d'assistance est inférieur à l'effort de rappel, afin que cet effort d'assistance ne gêne pas l'ouverture de l'embrayage dans le cas d'une défaillance électrique.

La partie d'amortissement permet d'assurer la majorité de l'amortissement de l'organe d'actionnement lorsque l'embrayage s'ouvre brusquement. Cette partie d'amortissement est conformée pour fournir une énergie d'assistance suffisante pour compenser l'énergie accumulée par l'organe d'actionnement pendant que l'organe d'assistance est sollicité contre la partie d'assistance de la came.

Un dispositif d'embrayage selon l'invention peut en outre comporter l'une ou plusieurs des caractéristiques suivantes.

- La came comporte au moins une partie neutre dans laquelle l'effort d'assistance est nul lorsque l'organe d'assistance est sollicité contre cette partie neutre. Une telle partie neutre permet de fournir une position stable à l'organe d'actionnement, dans laquelle il n'est pas soumit à un effort d'assistance. Une telle position stable est utile pendant le montage ou la livraison du dispositif de commande.
- La partie d'assistance comporte la partie neutre.
- La partie d'amortissement de la came comporte au moins une partie de stabilisation, dans laquelle l'effort d'assistance est inférieur ou égal à l'effort de rappel élastique, par exemple nul. Une telle partie de stabilisation optionnelle permet d'éviter un retour de l'organe d'actionnement vers sa seconde position, et permet de stabiliser l'organe d'actionnement dans une position dans laquelle l'embrayage est débrayé.

- L'organe d'assistance comprend au moins un ressort de poussée agencé entre des sièges fixe et mobile, le siège mobile portant un organe de contact destiné à coopérer avec la came, l'organe de contact comprenant par exemple au moins un galet destiné à rouler sur la came.
- Le dispositif de commande comporte des moyens d'entraînement de l'organe d'actionnement, comportant par exemple un moteur électrique muni d'un arbre de sortie relié cinématiquement à cet organe d'actionnement.
- Le dispositif d'embrayage est du type à deux embrayages, le dispositif de commande commandant l'un de ces embrayages.
- Le dispositif d'embrayage comporte au moins un dispositif de rattrapage de l'usure de l'embrayage, destiné à modifier une course effective de l'organe d'actionnement et/ou l'effort d'assistance en fonction de l'usure de l'embrayage, le dispositif de rattrapage d'usure étant commandé par l'organe d'actionnement lorsque l'organe d'assistance est sollicité contre la partie d'amortissement.

L'invention sera mieux comprise à la lecture de la description qui va suivre, donnée uniquement à titre d'exemple et faite en se référant aux dessins annexés dans lesquels :

- la figure 1 représente un dispositif de commande d'un dispositif d'embrayage selon l'invention,
- la figure 2 représente plus en détail des moyens d'assistance du dispositif de commande de la figure 1,
- la figure 3 est un graphique représentant les efforts auquel un organe d'actionnement du dispositif de commande de la figure 1 est soumis le long de sa course totale théorique entre une première et une seconde position,
- la figure 4 est un graphique représentant la vitesse de l'organe d'actionnement en fonction de sa course lorsqu'il est rappelé vers sa première position par l'effort de rappel d'un diaphragme du dispositif d'embrayage.

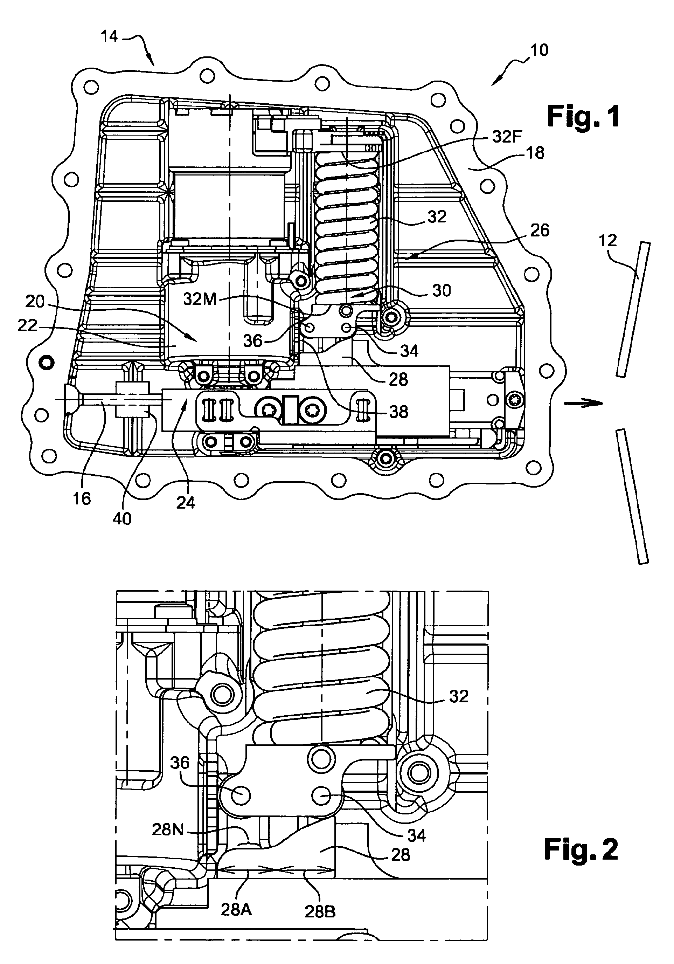

On a représenté sur la figure 1 un dispositif d'embrayage désigné par la référence générale 10.

Le dispositif d'embrayage 10 comporte un embrayage, comprenant un diaphragme 12 susceptible de basculer entre une position de repos, dans laquelle l'embrayage est débrayé, et une position active, dans laquelle l'embrayage est embrayé. Par exemple, cet embrayage équipe un dispositif à double embrayage.

Lorsqu'il est en position active, le diaphragme 12 enserre un disque de friction, relié en rotation à un organe mené, entre des plateaux de pression et de réaction, reliés en rotation à un organe menant.

Lorsqu'il est en position de repos, le diaphragme 12 n'enserre plus le disque de friction entre les plateaux de pression et de réaction. Ce disque de friction n'est alors plus lié en rotation avec les plateaux de pression et de réaction.

On doit exercer une poussée pour mettre l'embrayage en position active, le diaphragme 12 étant sinon rappelé élastiquement vers sa position de repos.

Le dispositif d'embrayage 10 comporte également un dispositif 14 de commande du diaphragme 12, destiné à commander les basculements du diaphragme 12 entre ses positions active et de repos.

Le dispositif d'embrayage 10 comporte un organe d'actionnement 16, de forme générale allongée, destiné à coopérer, directement ou indirectement, avec le diaphragme 12 de façon à commander ses basculements.

Par exemple, l'organe d'actionnement 16 est destiné à venir en butée avec un élément classique de tringlerie de commande, de préférence une fourchette de commande d'embrayage de véhicule automobile.

En variante, l'organe d'actionnement 16 pourrait former un organe d'entrée de commande hydraulique. Dans ce cas, l'organe d'actionnement serait une tige de piston de vérin hydraulique, ou un élément solidaire d'une telle tige.

L'organe d'actionnement 16 est déplaçable en translation suivant une course totale théorique, entre une première position et une seconde position dans laquelle l'embrayage est maintenu embrayé, à travers un orifice ménagé dans un carter fixe 18 du dispositif de commande 14. Au cours du mouvement de l'organe 16 vers la première position, le diaphragme 12 atteint sa position de repos et il y demeure pendant que l'organe 16 poursuit son mouvement, Si l'organe 16 atteignait effectivement la première position qui est l'extrémité de sa course théorique (ce qui ne se produit pas en fonctionnement comme on le verra plus loin), le diaphragme aurait donc alors encore sa première position.

Dans l'exemple représenté, la première position est une position saillante de l'organe d'actionnement 16, et la seconde position une position escamotée de cet organe d'actionnement 16, telles que la partie de l'organe d'actionnement 16 qui s'étend dans le carter 18 est plus importante en position escamotée qu'en position saillante.

En effet, l'organe d'actionnement 16 est destiné à coopérer avec une fourchette d'actionnement du diaphragme 12, de sorte que, pour passer l'embrayage en position embrayée, l'organe d'actionnement 16 tire sur la fourchette en se déplaçant vers sa seconde position, et cette fourchette applique un effort de poussée sur le diaphragme 12 pour l'amener en position active. Inversement, pour passer l'embrayage en position débrayée, l'organe d'actionnement 16 repousse la fourchette qui relâche alors le diaphragme 12.

On notera que, conformément à une variante non représentée, la première position pourrait être une position escamotée de l'organe d'actionnement 16, et la seconde position une position saillante de cet organe d'actionnement 16, telles que la partie de l'organe d'actionnement 16 qui s'étend dans le carter 18 est plus importante en position escamotée qu'en position saillante. Dans ce cas, l'organe d'actionnement serait destiné à pousser une fourchette qui reporterait directement cet effort de poussée au diaphragme lorsque l'organe d'actionnement se déplacerait vers sa position saillante.

L'organe d'actionnement 16 est susceptible d'être entraîné le long de sa course totale par des moyens 20 d'entraînement. Les moyens 20 d'entraînement comportent un moteur électrique 22, fixé au carter 18, dont l'arbre de sortie est relié cinématiquement à l'organe d'actionnement 16, par exemple par l'intermédiaire de moyens à engrenage 24 tel qu'un système à pignon et à crémaillère.

Le dispositif de commande 10 comprend également des moyens 26 d'assistance à l'entraînement de l'organe d'actionnement 16.

Ces moyens d'assistance 26 comprennent une came 28 et des moyens 30 de sollicitation élastique de cette came.

La came 28 est reliée cinématiquement à l'organe d'actionnement 16. Par exemple, cette came 28 est agencée sur cet organe d'actionnement 16, de sorte que toute sollicitation de la came 28 par les moyens 30 de sollicitation est directement rapportée à l'organe d'actionnement 16.

Les moyens 30 de sollicitation élastique comportent un organe élastique d'assistance 32 à effet axial, sollicité élastiquement contre la came 28. De préférence, l'organe d'assistance 32 comprend au moins un ressort de poussée, par exemple deux ressorts de poussée coaxiaux et logés l'un dans l'autre.

L'organe élastique d'assistance 32 s'étend entre un siège fixe 32F, dont la position est indépendante de l'allongement de l'organe élastique 32, et un siège mobile 32M, dont la position dépend de l'allongement de l'organe élastique 32.

Le siège fixe 32F est solidaire du carter 18 dans lequel sont logés les moyens d'assistance 26.

Le siège mobile 32M porte un organe de contact

34 destiné à coopérer avec la came 28. De préférence, l'organe de contact 34 comprend au moins un galet destiné à rouler sur la came 28. En outre, le siège mobile 32M porte un second galet 36, destiné à coopérer avec une paroi plane 38 du carter 18 pour guider le siège mobile 32M parallèlement à l'effet axial de l'organe d'assistance 32.

La came 28 sera maintenant décrite plus en détail, en référence à la figure 2.

La came 28 comporte des première et seconde parties adjacentes, dites respectivement partie d'assistance 28A et partie d'amortissement 28B.

La partie d'assistance 28A, est conformée de façon que, lorsque l'organe d'assistance 32 est sollicité contre cette partie d'assistance 28A, l'effort d'assistance est inférieur à l'effort de rappel élastique du diaphragme 12. Par ailleurs, lorsque l'organe d'actionnement 16 coopère avec le diaphragme 12 de façon à maintenir l'embrayage embrayé, l'organe d'assistance 32 sollicite cette partie d'assistance 28A.

Ainsi, tant que l'embrayage est embrayé, les moyens d'assistance 26 ne fournissent pas un effort suffisant pour empêcher le diaphragme 12 de basculer vers sa position de repos. En cas de défaillance du moteur électrique 22, l'embrayage peut ainsi débrayer automatiquement, sans contrainte.

Dans la partie d'assistance 28A, la came comporte une surface de came présentant une inclinaison comprise entre 25 et 90° par rapport à la direction de l'effet axial de l'organe d'assistance 32.

On notera que l'inclinaison vaut 90° dans une partie 28N dite neutre, dans laquelle l'effort d'assistance est nul lorsque l'organe d'assistance 32 est sollicité contre cette partie neutre 28N. En effet, l'application d'un effort de sollicitation perpendiculairement à la surface de came ne permet pas de générer un effort d'assistance non nul.

Une telle partie neutre est notamment utile pour fournir une position stable à l'organe d'actionnement 16, dans laquelle il n'est pas soumit à un effort d'assistance. Une telle position stable facilite le montage ou la livraison du dispositif de commande 14.

En variante, une partie neutre pourrait être agencée à un autre endroit de la came 28, par exemple au sommet de la partie d'amortissement 28B.

Dans ce qui suit, on appellera « segment de course utile » le segment de course parcouru par l'organe d'actionnement 16 lorsque l'organe de sollicitation 32 sollicite la partie d'assistance 28A de la came 28.

La partie d'amortissement 28B est destinée à amortir l'organe d'actionnement 16 lorsqu'il est brusquement rappelé vers sa première position par l'effort de rappel du diaphragme 12.

A cet effet, lorsque l'organe d'assistance 32 est sollicité contre cette partie d'amortissement 28B, l'effort d'assistance fourni est supérieur à l'effort de rappel. Par exemple, la surface de came y présente une inclinaison comprise entre 50 et 80°, de préférence entre 70 et 80°, par rapport à la direction de l'effet axial de l'organe d'assistance 32.

On notera que, lorsque l'organe d'assistance 32 est sollicité contre cette partie d'amortissement 28B, l'embrayage est débrayé.

Dans ce qui suit, on appellera « segment de course libre » le segment de course parcouru par l'organe d'actionnement 16 lorsque l'organe de sollicitation 32 sollicite la partie d'amortissement 28B de la came 28.

Grâce à la partie d'amortissement 28B, l'énergie d'assistance, due à l'effort d'assistance qui serait appliqué le long de la course totale théorique de l'organe d'actionnement 16, si ce dernier était rappelé vers sa première position, est supérieure ou égale à l'énergie de rappel, due à l'effort de rappel élastique du diaphragme 12 appliqué le long de cette course totale.

On notera que l'énergie d'assistance dépend à la fois de l'inclinaison de la surface de came, de l'effort de sollicitation et de la longueur du segment de course libre de l'organe d'actionnement 16. Un homme du métier réalisant l'invention saura aisément choisir ces paramètres en fonction du diaphragme 12, connaissant l'effort de rappel appliqué par le diaphragme 12 sur l'organe d'actionnement 16 et la longueur du segment de course utile de cet organe d'actionnement 16.

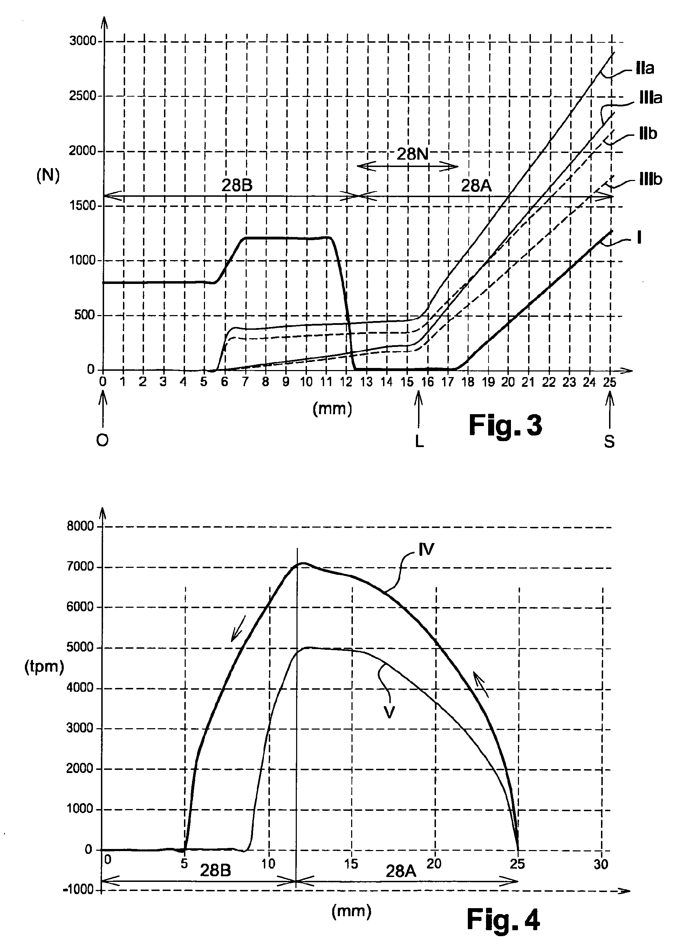

On a représenté sur la figure 3 un graphique montrant des exemples de courbes d'efforts appliqués sur l'organe d'actionnement 16. Ces courbes ont pour abscisse la course de l'organe d'actionnement (en mm) et en ordonnée l'effort appliqué à cet organe d'actionnement (en N).

On notera que, sur l'axe des abscisses, l'origine O correspond à la première position de l'organe d'actionnement 16, et l'abscisse S (à 25 mm) correspond à la seconde position de cet organe d'actionnement 16.

Les courbes IIa et IIb représentent la valeur absolue de l'effort maximal de rappel pouvant être appliqué par le diaphragme 12 sur l'organe d'actionnement 16, en particulier dans le cas d'un embrayage neuf, entraîné en rotation par un moteur de véhicule automobile au régime maximal. Ces courbes IIa et IIb représentent respectivement cet effort lorsque l'organe d'actionnement se déplace vers sa seconde position et lorsqu'il se déplace vers sa première position. La différence entre ces courbes est due à un effet d'hystérésis causé par divers frottements.

Les courbes IIIa et IIIb représentent la valeur absolue de l'effort minimal de rappel pouvant être appliqué par le diaphragme 12 sur l'organe d'actionnement 16, en particulier dans le cas où l'embrayage n'est pas entraîné en rotation. Ces courbes IIIa et IIIb représentent respectivement cet effort lorsque l'organe d'actionnement se déplace vers sa seconde position et lorsqu'il se déplace vers sa première position. La différence entre ces courbes est également due à un effet d'hystérésis causé par divers frottements.

Les comportements des courbes IIa, IIb, IIIa et IIIb étant sensiblement identiques, on ne décrira ci-après que le comportement de la courbe IIb, correspondant à l'effort de rappel appliqué à l'organe d'actionnement 16 lorsqu'il est rappelé vers sa première position, dans le cas d'un embrayage neuf, entraîné en rotation par un moteur de véhicule automobile au régime maximal.

Dans un premier segment de la course de rappel vers la première position de l'organe d'actionnement 16 (entre 25 et 15,5 mm), le diaphragme, qui agit comme un ressort élastique, fournit un effort de rappel qui diminue proportionnellement avec la course de l'organe d'actionnement. Durant cette course, l'embrayage est embrayé, c'est-à-dire que les plateaux de pression et de réaction enserrent le disque de friction.

Au point d'abscisse 15,5 mm, dit point de léchage L, les plateaux de pression et de réaction sont à la limite du contact avec le disque de friction. En deçà de ce point, l'embrayage est débrayé et le diaphragme ne s'appuie plus contre le plateaux de pression. La courbe IIb comporte donc une rupture de pente à ce point.

L'effort de rappel diminue ensuite progressivement (entre 15,5 mm et 5 ou 6 mm) jusqu'à ce que le diaphragme soit dans sa position de repos. En deçà de cette position de repos (entre 5 ou 6 mm et 0 mm), l'effort de rappel est nul. En effet, sur ce segment de course, l'organe d'actionnement 16 ne coopère pas avec le diaphragme 12.

La courbe I représentée la valeur absolue de l'effort d'assistance appliqué par les moyens d'assistance 26 à l'organe d'actionnement 16 en fonction de sa course.

On a également reporté sur la figure 3 les parties de la came qui sont sollicitées au cours de la course totale de l'organe d'actionnement 16.

Lorsque la course est comprise entre 25 et 12,5 mm, l'organe de sollicitation 32 est sollicité contre la partie d'assistance 28A de la came 28. Sur cette partie d'assistance, l'inclinaison de la surface de came varie depuis 25° jusqu'à 90° par rapport à la direction de l'effort de sollicitation sur la came 28. L'effort d'assistance diminue donc progressivement jusqu'à être nul, lorsque l'organe de sollicitation 32 est sollicité contre la partie neutre 28N.

On constate sur la figure 3 que, lorsque l'organe de sollicitation 32 est sollicité contre la partie d'assistance 28A, l'effort d'assistance est inférieur à l'effort de rappel élastique.

Lorsque la course est comprise entre 12,5 et 0 mm, l'organe de sollicitation 32 est sollicité contre la partie d'amortissement 28B de la came 28. L'inclinaison de la surface de came de cette partie d'amortissement 28B est tel que l'effort d'assistance est supérieur à l'effort élastique lorsque l'organe de sollicitation 32 est sollicité contre cette partie d'amortissement 28B. De préférence, cet effort d'assistance est supérieur au double de l'effort élastique.

Dans l'exemple représenté, l'effort d'assistance est moindre entre 6 et 0 mm qu'entre 7 et 11 mm. Cette diminution de l'effort d'assistance est dû à une augmentation de l'inclinaison de la surface de came par rapport à la direction d'application de l'effort de sollicitation sur la came 28. Cette augmentation d'inclinaison est visible sur la figure 2.

On notera que l'énergie d'assistance, due à l'effort d'assistance appliqué le long de la course totale théorique de l'organe d'actionnement, ainsi que l'énergie de rappel, due à l'effort de rappel élastique du diaphragme appliqué le long de cette course totale, sont représentés sur cette figure 3.

En effet, l'énergie d'assistance est représentée par l'aire délimitée par la courbe I due l'effort d'assistance et l'axe des abscisses. De même, l'énergie de rappel est représentée par l'aire délimitée par la courbe IIb de l'effort de rappel et l'axe des abscisses.

Conformément à l'invention, l'énergie d'assistance est supérieure à l'énergie de rappel, afin d'amortir l'organe d'actionnement 16 lorsqu'il est rappelé par le diaphragme 12 vers sa première position.

Ainsi, à partir de mesures simples de l'énergie de rappel, l'homme du métier saura conformer les moyens d'assistance 26 pour obtenir une énergie d'assistance suffisante.

On a représenté sur la figure 4 les effets de l'amortissement lors du rappel brusque de l'organe d'actionnement 16 vers sa première position.

Les courbes de la figure 4 ont pour abscisse la course de l'organe d'actionnement (en mm), et pour ordonnée une mesure de la vitesse de rotation de l'arbre de sortie du moteur électrique 22 (en tours par minute), cette vitesse étant proportionnelle à la vitesse de l'organe d'actionnement.

Les courbes IV et V représentent la vitesse de rappel de l'organe d'actionnement 16 respectivement dans le cas d'un effort maximal de rappel (cas d'un embrayage neuf, entraîné en rotation par un moteur de véhicule automobile au régime maximal) et d'un effort minimal de rappel (cas d'un embrayage qui n'est pas entraîné en rotation).

Le comportement de ces courbes étant similaire, nous ne décrirons ci-après que le comportement de la courbe IV.

Lorsque l'organe d'actionnement est rappelé vers sa position d'escamotage par l'effort de rappel du diaphragme, sa vitesse augmente progressivement entre 25 et 12,5 mm de course, puisque, au cours de cette course, l'effort de rappel est supérieur à l'effort d'assistance qui lui est opposé (voir la figure 3).

Toutefois, entre 12,5 et 0 mm, l'effort d'assistance est suffisant pour faire diminuer la vitesse de l'organe d'actionnement, jusqu'à annuler cette vitesse, l'énergie d'assistance étant supérieure à l'énergie de rappel.

L'invention permet donc clairement de sauvegarder les éléments du dispositif de commande lorsque l'organe d'actionnement est rappelé brutalement vers sa position saillante par le diaphragme, en compensant l'énergie de rappel par l'énergie d'assistance.

On observera sur la figure 4 que la vitesse de l'organe d'actionnement s'annule alors que sa course n'a pas atteint son extrémité représentée par l'origine du repère. L'organe d'actionnement se trouve donc stoppé bien avant d'atteindre la première position formant l'extrémité de sa course totale théorique (où l'embrayage est encore débrayé). Cela est dû au fait que l'énergie d'assistance est supérieure à l'énergie de rappel. L'organe d'actionnement ne vient donc jamais jusqu'à cette extrémité. On comprend ainsi que la course totale soit théorique car elle ne correspond jamais à la course pratique ou effective. Cette course théorique est donc une course virtuelle.

On notera que, dans l'exemple représenté, lorsque l'organe de sollicitation 32 sollicite la partie d'amortissement 28B de la came 28, l'effort d'amortissement étant supérieur à l'effort de rappel, l'organe d'actionnement 16 peut, après que sa course ait été amortie, être rappelé vers une position d'équilibre, dans laquelle l'organe de sollicitation 32 sollicite la came entre les partie d'assistance 28A et d'amortissement 28B de la came 28.

En variante, la partie d'amortissement 28B de la came 28 pourrait comporter au moins une partie de stabilisation, dans laquelle l'effort d'assistance est inférieur ou égal à l'effort de rappel élastique, par exemple nul. La position d'équilibre de l'organe d'actionnement serait alors trouvée lorsque l'organe de sollicitation 32 solliciterait cette partie de stabilisation.

De préférence, le dispositif d'embrayage 10 comporte au moins un dispositif 40 de rattrapage de l'usure de l'embrayage de type classique, par exemple un dispositif de rattrapage de l'usure de garnitures de friction de l'embrayage ou un dispositif de rattrapage de l'usure du diaphragme 12.

Un dispositif de rattrapage de l'usure de garnitures de friction est par exemple décrit dans FR 2 901 587. L'usure des garnitures de friction implique une augmentation de la course totale de l'organe d'actionnement 16. Un tel dispositif de rattrapage d'usure est donc destiné à compenser cette augmentation de course, en modifiant la longueur de l'organe d'actionnement 16 en fonction de l'usure des garnitures.

Par ailleurs, un dispositif de rattrapage de l'usure du diaphragme est par exemple décrit dans FR 2 896 288. L'usure du diaphragme a notamment pour effet de modifier l'effort de rappel de ce diaphragme. Un tel dispositif de rattrapage d'usure est donc destiné à compenser cette modification de l'effort de rappel, en modifiant l'effort d'assistance en fonction de cette modification de l'effort de rappel. Par exemple, le dispositif de rattrapage commande une modification de l'allongement de l'organe élastique d'assistance, notamment en modifiant la distance entre ses sièges.

De manière classique, un dispositif 40 de rattrapage d'usure (de garniture de friction ou du diaphragme) est commandé par l'organe d'actionnement 16. A cet effet, la course totale de l'organe d'actionnement 16 comporte un segment de course, dit course de réglage, au cours de laquelle l'organe d'actionnement 16 active le dispositif de rattrapage d'usure 40.

La course de réglage est de préférence distincte de la course utile de l'organe d'actionnement 16, dans laquelle cet organe d'actionnement 16 coopère avec le diaphragme 12. En effet, lorsque les courses de réglage et utile comportent une partie commune, il existe un risque d'activation intempestive du dispositif de rattrapage d'usure 40.

Or, dans l'invention, on connaît de manière simple et précise un segment de course dans lequel on est sûr que l'embrayage est en position débrayée. En effet, dans l'invention, l'embrayage est en position débrayée lorsque l'organe de sollicitation 32 sollicite la partie d'amortissement 28B.

Pour éviter qu'une partie de la course de réglage coïncide avec la course utile, le dispositif de rattrapage d'usure 40 est agencé selon l'invention de façon que l'organe d'actionnement 16 active ce dispositif de rattrapage 40 lorsqu'il se déplace suivant le segment de course dans lequel l'organe de sollicitation 32 sollicite la partie d'amortissement 28B de la came 28.

On notera que l'invention n'est pas limité au mode de réalisation précédemment décrit, et pourrait comporter des variantes sans sortir du cadre des revendications.

## Revendications

1.  Dispositif d'embrayage (10), notamment pour véhicule automobile, du type comportant :

    - un embrayage comprenant un diaphragme (12) susceptible de basculer entre une position de repos dans laquelle l'embrayage est débrayé, et une position active dans laquelle l'embrayage est embrayé, ce diaphragme (12) étant rappelé élastiquement vers sa position de repos ; et
    - un dispositif (14) de commande du diaphragme (12), comprenant :

        - un organe (16) d'actionnement du diaphragme (12), déplaçable suivant une course totale théorique définie entre une première position et une seconde position dans laquelle l'organe d'actionnement (16) coopère avec le diaphragme (12) pour le maintenir en position active, le dispositif de commande étant agencé de sorte que le diaphragme, après avoir quitté sa position active, atteint sa position de repos lorsque l'organe d'actionnement est à distance de la première position; et
        - des moyens (26) d'assistance au déplacement de l'organe d'actionnement (16), destinés à appliquer à l'organe d'actionnement (16) un effort d'assistance opposé à un effort de rappel élastique du diaphragme (12) vers sa position de repos,

les efforts d'assistance et de rappel générant respectivement des énergies dites d'assistance et de rappel,

**caractérisé en ce que** le diaphragme (12) est tel qu'on exerce un effort pour le mettre en position active, et **en ce que** le dispositif d'embrayage (10) est agencé de sorte que, sur la course totale théorique vers la première position, l'énergie d'assistance est supérieure ou égale à l'énergie de rappel, si bien que, en fonctionnement, l'organe d'actionnement, demeure à distance de la première position.

2.  Dispositif d'embrayage (10) selon la revendication 1, dans lequel les moyens d'assistance (26) comportent un organe d'assistance (32) sollicité élastiquement contre une came (28) reliée cinématiquement à l'organe d'actionnement (16) de façon à fournir l'effort d'assistance, et dans lequel la came (28) comporte :

    - une partie d'assistance (28A), telle que, lorsque l'organe d'assistance (32) est sollicité contre cette partie d'assistance (28A), l'effort d'assistance est inférieur à l'effort de rappel élastique du diaphragme (12),
    - une partie d'amortissement (28B), telle que, lorsque l'organe d'assistance (32) est sollicité contre cette partie d'amortissement (28B), l'effort d'assistance est suffisant pour que, le long de la course totale théorique, l'énergie d'assistance soit supérieure ou égale à l'énergie de rappel,

    l'organe d'assistance (32) étant sollicité contre la partie d'assistance (28A) lorsque l'embrayage est embrayé, et l'embrayage étant débrayé lorsque l'organe d'assistance (32) est sollicité contre la partie d'amortissement (28B).

3.  Dispositif d'embrayage (10) selon la revendication 2, dans lequel la came (28) comporte au moins une partie neutre (28N) dans laquelle l'effort d'assistance est nul lorsque l'organe d'assistance (32) est sollicité contre cette partie neutre (28N).

4.  Dispositif d'embrayage (10) selon la revendication 3, dans lequel la partie d'assistance (28A) comporte la partie neutre (28N).

5.  Dispositif d'embrayage (10) selon l'une quelconque des revendications 2 à 4, dans lequel la partie d'amortissement (28B) de la came comporte au moins une partie de stabilisation, dans laquelle l'effort d'assistance est inférieur ou égal à l'effort de rappel élastique, par exemple nul.

6.  Dispositif d'embrayage (10) selon l'une quelconque des revendications 2 à 5, dans lequel l'organe d'assistance (32) comprend au moins un ressort de poussée agencé entre des sièges fixe (32F) et mobile (32M), le siège mobile (32M) portant un organe de contact (34) destiné à coopérer avec la came (28), l'organe de contact (34) comprenant par exemple au moins un galet destiné à rouler sur la came (28).

7.  Dispositif d'embrayage (10) selon l'une quelconque des revendications précédentes, dans lequel le dispositif de commande (14) comporte des moyens (18) d'entraînement de l'organe d'actionnement (16), comportant par exemple un moteur électrique (22) muni d'un arbre de sortie relié cinématiquement à cet organe d'actionnement.

8.  Dispositif d'embrayage (10) selon l'une quelconque des revendications précédentes, du type à deux embrayages, le dispositif de commande commandant l'un de ces embrayages.

9.  Dispositif d'embrayage (10) selon l'une quelconque des revendications 2 à 8, comportant au moins un dispositif (40) de rattrapage de l'usure de l'embrayage, destiné à modifier une course effective de l'organe d'actionnement et/ou l'effort d'assistance en fonction de l'usure de l'embrayage, le dispositif de rattrapage d'usure étant activé par l'organe d'actionnement (16) lorsque l'organe d'assistance (32) est sollicité contre la partie d'amortissement (28B).

**Claims**

1.  Clutch device (10), particularly for a motor vehicle, comprising:

    - a clutch comprising a diaphragm (12) toggling between a rest position in which the clutch is disengaged, and an active position in which the clutch is engaged, the diaphragm (12) being returned resiliently to its rest position; and
    - a device (14) for operating the diaphragm (12), comprising:

        - a member (16) for actuating the diaphragm (12) that can be moved over a theoretical total travel defined between a first position and a second position in which the actuating member (16) cooperates with the diaphragm (12) to hold it in the active position, the operating device being arranged so that the diaphragm, after leaving its active position, reaches its rest position when the actuating member is some distance away from the first position; and
        - means (26) for assisting the movement of the actuating member (16), intended to apply an assistance force to the actuating member (16) opposing a resilient return force on the diaphragm (12) to its rest position,

the assistance and return forces respectively generating the said assistance and return energies, **characterised in that** the diaphragm (12) is such that a force is exerted to place it in the active position, and **in that** the clutch device (10) is arranged such that, over the total theoretical travel to the first position, the assistance energy is greater than or equal to the return energy which means that, in operation, the actuating member remains at some distance from the first position.

2. Clutch device (10) according to claim 1, wherein the assistance means (26) comprise an assistance member (32) resiliently urged against a cam (28) kinematically connected to the actuating member (16) so as to provide the assistance force, and wherein the cam (28) comprises:

- an assistance portion (28A) such that, when the assistance member (32) is urged against the assistance portion (28A), the assistance force is less than the resilient return force of the diaphragm (12),
- a damping portion (28B) such that when the assistance member (32) is urged against the damping portion (28B), the assistance force is sufficient to ensure that, over the total theoretical travel, the assistance energy is greater than or equal to the return energy,

the assistance member (32) being urged against the assistance portion (28A) when the clutch is engaged, and the clutch being disengaged when the assistance member (32) is urged against the damping portion (28B).

3. Clutch device (10) according to claim 2, wherein the cam (28) includes at least one neutral portion (28N) in which the assistance force is zero when the assistance member (32) is urged against the neutral portion (28N).

4. Clutch device (10) according to claim 3, wherein the assistance portion (28A) includes the neutral portion (28N).

5. Clutch device (10) according to any one of claims 2 to 4, wherein the damping portion (28B) of the cam includes at least one stabilising portion, in which the assistance force is less than or equal to the resilient return force, for example zero.

6. Clutch device (10) according to any one of claims 2 to 5, wherein the assistance member (32) includes at least one thrust spring disposed between a fixed seating (32F) and a movable seating (32M), the movable seating (32M) carrying a contact member (34) designed to cooperate with the cam (28), the contact member (34) including for example at least one roller for rolling on the cam (28).

7. Clutch device (10) according to any one of the preceding claims, wherein the operating device (14) includes means (18) for operating the actuating member (16), comprising for example an electric motor (22) provided with an output shaft kinematically connected to the actuating member.

8. Clutch device (10) according to any one of the preceding claims, of the type with two clutches, the operating device controlling one of these clutches.

9. Clutch device (10) according to any one of claims 2 to 8, comprising at least one device (40) for taking up the wear of the clutch, intended to modify the effective travel of the actuating member and/or the assistance force in relation to the wear on the clutch, the wear take-up device being activated by the actuating member (16) when the assistance member (32) is urged against the damping portion (28B).

**Patentansprüche**

1. Kupplungsvorrichtung (10), insbesondere für Kraftfahrzeuge, umfassend:

- eine Kupplung mit einer Membranfeder (12), die zwischen einer Ruheposition, in der die Kupplung ausgekuppelt ist, und einer aktiven Position, in der die Kupplung eingekuppelt ist, schwenken kann, wobei die Membranfeder (12) elastisch in ihre Ruheposition zurückgestellt ist; und
- eine Vorrichtung (14) zur Steuerung der Membranfeder (12), enthaltend:

- ein Organ (16) zur Betätigung der Membranfeder (12), das entlang eines theoretischen Gesamtwegs verstellbar ist, der zwischen einer ersten Position und einer zweiten Position, in der das Betätigungsorgan (16) mit der Membranfeder (12) zusammenwirkt, um sie in der aktiven Position zu halten, definiert ist, wobei die Steuerungsvorrichtung derart angeordnet ist, dass die Membranfeder, nachdem sie ihre aktive Position verlassen hat, ihre Ruheposition annimmt, wenn das Betätigungsorgan in Abstand von der ersten Position ist; und

- Mittel (26) zur Unterstützung der Verstellung des Betätigungsorgans (16), die dazu bestimmt sind, auf das Betätigungsorgan (16) eine Unterstützungskraft anzuwenden, die entgegengesetzt ist zu einer elastischen Kraft zur Rückstellung der Membranfeder (12) in ihre Ruheposition,

wobei die Unterstützungskraft und die Rückstellkraft jeweils als Unterstützungsenergie und Rückstellenergie bezeichnete Energien erzeugen, **dadurch gekennzeichnet, dass** die Membranfeder (12) derart ausgebildet ist, dass man eine Kraft ausübt, um sie in die aktive Position zu bringen, und dass die Kupplungsvorrichtung (10) derart angeordnet ist, dass auf dem theoretischen Gesamtweg in die erste Position die Unterstützungsenergie größer als oder gleich der Rückstellenergie ist, so dass im Betrieb das Betätigungsorgan im Abstand von der ersten Position bleibt.

2. Kupplungsvorrichtung (10) nach Anspruch 1, wobei die Unterstützungsmittel (26) ein Unterstützungsorgan (32) aufweisen, welches elastisch gegen einen Nocken (28) beaufschlagt ist, der kinematisch mit dem Betätigungsorgan (16) verbunden ist, um die Unterstützungskraft zu liefern, und wobei der Nocken (28) aufweist:

- einen Unterstützungsteil (28A) derart, dass wenn das Unterstützungsorgan (32) gegen diesen Unterstützungsteil (28A) beaufschlagt ist, die Unterstützungskraft kleiner ist als die elastische Rückstellkraft der Membranfeder (12),
- einen Dämpfungsteil (28B) derart, dass wenn das Unterstützungsorgan (32) gegen diesen Dämpfungsteil (28B) beaufschlagt ist, die Unterstützungskraft dafür ausreichend ist, dass entlang des theoretischen Gesamtwegs die Unterstützungsenergie größer als oder gleich der Rückstellenergie ist,

wobei das Unterstützungsorgan (32) gegen den Unterstützungsteil (28A) beaufschlagt ist, wenn die Kupplung eingekuppelt ist, und wobei die Kupplung ausgekuppelt ist, wenn das Unterstützungsorgan (32) gegen den Dämpfungsteil (28B) beaufschlagt ist.

3. Kupplungsvorrichtung (10) nach Anspruch 2, wobei der Nocken (28) zumindest einen neutralen Teil (28N) aufweist, in dem die Unterstützungskraft null ist wenn das Unterstützungsorgan (32) gegen diesen neutralen Teil (28N) beaufschlagt ist.

4. Kupplungsvorrichtung (10) nach Anspruch 3, wobei der Unterstützungsteil (28A) den neutralen Teil (28N) aufweist.

5. Kupplungsvorrichtung (10) nach einem der Ansprüche 2 bis 4, wobei der Dämpfungsteil (28B) des Nockens zumindest einen Stabilisierungsteil aufweist, in dem die Unterstützungskraft kleiner als oder gleich der elastischen Rückstellkraft, beispielsweise gleich null ist.

6. Kupplungsvorrichtung (10) nach einem der Ansprüche 2 bis 5, wobei das Unterstützungsorgan (32) mindestens eine Druckfeder umfasst, die zwischen einem festen Sitz (32F) und einem beweglichen Sitz (32M) angeordnet ist, wobei der mobile Sitz (32M) ein Kontaktorgan (34) trägt, welches dazu bestimmt ist, mit dem Nocken (28) zusammenzuwirken, wobei das Kontaktorgan (34) zum Beispiel mindestens eine Laufrolle umfasst, die dazu bestimmt ist, auf dem Nocken (28) zu rollen.

7. Kupplungsvorrichtung (10) nach einem der vorherigen Ansprüche, wobei die Steuerungsvorrichtung (14) Mittel (18) zum Antreiben des Betätigungsorgans (16) aufweist, die zum Beispiel einen Elektromotor (22) mit einer Ausgangswelle umfassen, welche kinematisch mit diesem Betätigungsorgan verbunden ist.

8. Kupplungsvorrichtung (10) nach einem der vorherigen Ansprüche, mit zwei Kupplungen, wobei die Steuerungsvorrichtung eine dieser Kupplungen steuert.

9. Kupplungsvorrichtung (10) nach einem der Ansprüche 2 bis 8, umfassend mindestens eine Vorrichtung (40) zur Nachstellung des Verschleiß der Kupplung, die dazu bestimmt ist, einen effektiven Weg des Betätigungsorgans und/oder die Unterstützungskraft in Abhängigkeit von dem Verschleiß der Kupplung zu modifizieren, wobei die Verschleißnachstellvorrichtung durch das Betätigungsorgan (16) aktiviert wird, wenn das Unterstützungsorgan (32) gegen den Dämpfungsteil (28B) beaufschlagt ist.

**Fig. 1**

**Fig. 2**

**Fig. 3**

**Fig. 4**

12

**EP 2 294 328 B1**

## RÉFÉRENCES CITÉES DANS LA DESCRIPTION

**Documents brevets cités dans la description**

- FR 2896288 A
- GB 2351129 A
- FR 2901587
- FR 2896288